# EUROPEAN PATENT SPECIFICATION

(11) **EP 2 894 965 B1**
(45) Date of publication and mention of the grant of the patent: **27.03.2019**
(21) Application number: 13837745.2
(22) Date of filing: 11.09.2013
(51) Int. Cl.: A01G 9/02

(54) **A PLANT WALL AND A METHOD FOR RECYCLING NUTRIENTS IN THE PLANT WALL**
PFLANZENWAND UND VERFAHREN ZUR WIEDERVERWENDUNG VON NÄHRSTOFFEN IN DER PFLANZENWAND
MUR VÉGÉTAL ET PROCÉDÉ DE RECYCLAGE DE SUBSTANCES NUTRITIVES DANS LE MUR VÉGÉTAL

(30) Priority: 11.09.2012 FI 20125938
(43) Date of publication of application: 22.07.2015
(73) Proprietor: Green House Effect Oy, 00790 Helsinki (FI)
(72) Inventor: SONNINEN, Mikko, FI-00790 Helsinki (FI)
(74) Representative: Berggren Oy, Helsinki & Oulu
(86) International application number: PCT/FI2013/050876
(87) International publication number: WO 2014/041243

(56) References cited:
- EP-A1- 2 186 395
- EP-A2- 0 313 357
- CN-A- 102 217 506
- FR-A1- 2 568 448
- FR-A1- 2 956 946
- FR-A1- 2 956 946
- FR-A1- 2 967 331
- GB-A- 2 430 856
- US-A- 5 257 476
- US-A1- 2011 059 518
- US-A1- 2011 258 925
- US-A1- 2011 258 925

## Description

The invention relates to a plant wall as set forth in the preamble of claim 1, comprising a plurality of stackable, elongated container elements, whereby inside each container element can be introduced at least one plant for growing.

The invention relates also to a plant wall, comprising a plurality of stacked, elongated container elements, whereby inside each container element has been introduced at least one plant.

The invention further relates to a method as set forth in the preamble of claim 10 for recycling nutrients in the plant wall, having its non-woven bags provided with a plurality of plants.

Increasingly popular today both in business and private use are plant walls employed as interior design elements, wherein the wall is overlaid with natural plants such as houseplants, herbs or vegetables.

At least in corporate use, this type of plant wall used as an interior design element should be effortless to care and as maintenance-free as possible. The practical meaning of this is that the recycling of nutrients should be automatic or semi-automatic and, in addition, the plant wall should be reliable in operation. When a plant wall is employed in common room type spaces, the plant wall should have such a nutrient cycle that would result in a hazard as insignificant as possible regarding the release of microbes, particularly pathogens, from the plant wall into the room space. This entails that the plant wall should be reliable in operation, nor should it seep or leak water or moisture into the surroundings. Also, the plant wall should be easy to assemble and dismantle.

More specifically, the invention relates to a plant wall as set forth in claim 1, as well as to a method as set forth in claim 10 for recycling nutrients in a plant wall. The invention relates to a plant wall, comprising a plurality of stackable, elongated container elements, and a plurality of non-woven bags, whereby inside each container element can be placed at least one plant for growing. In the plant wall, the roots of each plant set for growing are introducible inside a non-woven bag provided with small perforations, said bag being manufactured from a porous plastic-based nonwoven fabric material permeable to both water and nutrients possibly dissolved in water, yet does not itself substantially absorb water, whereby each non-woven bag can be placed inside a container element in such a way that the stem of each plant set in a non-woven bag for growing extends upward from the bottom of said non-woven bag.

In more specific terms, the invention relates to a plant wall, comprising a plurality of stackable, elongated container elements, whereby inside each container element can be accommodated at least one plant for growing, such that the roots of each plant set for growing are introducible inside a non-woven bag provided with pores, each container element comprising an elongated receptacle provided with a floor, said floor having its laterally directed end sides fitted with upward directed end walls and its longitudinally directed flank sides fitted with upward directed flank walls, comprising a rear flank wall that extends at an angle of about 90 degrees upward from the floor level, as well a front flank wall that extends at an angle of about 20-50 degrees, preferably at an angle of about 30-45 degrees, upward from the floor level and at the same time away from said rear flank wall, said rear flank wall having its top edge formed with a container support extending from the plane of the rear flank side towards the opposite front flank wall, such that upon said container support can be seated the floor of an upper container element located above said container element in such a way that the upper container element and the lower container element extend lengthwise co-directionally and the container support has such a length in the lengthwise direction of the end walls that between a free top edge of the container element's front flank wall and a free edge of the container support is left a void space or opening. Each non-woven bag is introducible inside a container element, on the floor of said container element, such that the stem of a plant set in each non-woven bag for growing extends upward from the container element's floor, the manufacturing material of said non-woven bag being a so-called non-woven fabric, wherein the fabric is produced from a porous plastic-based material by bonding long fibers or filaments to each other mechanically, thermally, or chemically for giving a finished bag such an average pore density per unit area that the bag is permeable to both water and nutrients possibly dissolved in water, yet is capable of retaining water for more than ten seconds in a wet condition, as well as is capable of blocking the admission of light from above the top edge and the front flank wall by not less than 90% to the root system of a plant once the plant has its roots placed in the bag, and
- from the upper container element there is a liquid connection to the lower container element by way of a first overflow pipe as well as by way of a possible second overflow pipe fitted with a flooding valve, and from the lower container element extends to the upper container element a liquid inlet pipe running in conjunction with the first overflow pipe.

The invention relates also to a plant wall, comprising a plurality of stacked, elongated container elements, whereby inside each container element has been placed at least one plant. In the plant wall, the roots of each plant have been introduced inside a non-woven bag, which is provided with pores, such as small perforations, and which is manufactured from a porous plastic-based non-woven fabric material both permeable to and capable of retaining both water and nutrients possibly dissolved in water, yet does not itself substantially absorb water, and each non-woven bag is positioned inside a container element in such a way that the stem of each plant extends upward from the floor of said container element.

As the container elements included in a plant wall of the invention are provided with porous non-woven bags permeable to both air and water and to nutrients dissolved in water, an important benefit is achieved, namely that the roots of plants present in the non-woven bags are appropriately supplied with air as well as with a required amount of nutrients. Water and nutrients present therein, which the plant is not able to consume, do not remain in a non-woven bag for a long time, however, but disappear after about 10-30 seconds from the bag made of a permeable non-woven fabric. This water retention capability of a non-woven bag has been measured in conditions with no growth medium inside the bag. In case the bag contains e.g. topsoil or some other water retaining matter, this has naturally an increasing effect on the overall water retention capacity of the non-woven bag and the growth medium.

This has a health promoting effect on the roots of plants, and the entire plant wall remains at the same time free of pathogens as the non-woven bag does not retain excess nutrient solution that would function as a culture medium for microbes, such as algae.

One important quality of a non-woven bag is to allow, due to its porosity, the migration of a slightest amount of water from the floor of a container element into a growth medium inside the non-woven bag. The bag creates a direct capillary connection between water on the floor of a container element and a growth medium in the bag, while nevertheless keeping the growth medium isolated in the bag. Since the container elements are open upward, an additional benefit is achieved in that moisture is allowed to evaporate from inside the container elements, which also further contributes to keeping the plant wall pathogen-free as the moisture does not remain on the floor of a container but the container elements have a chance to dry a little between watering cycles.

The non-woven bag is manufactured preferably from a materially porous synthetic, non-rotting material, which nevertheless prevents the roots of a plant from being reached by the light arriving on the floor of a container element through a gap between the stacked container elements.

The material must be sufficiently durable to withstand the pressure applied on the walls of a bag both by roots growing inside the bag and by the growth medium.

The material must have such a pore size (= aperture size) that it prevents most of the plant roots from growing through a bag, allowing just the smallest roots of a plant to pass through the bag. Furthermore, the bag material and the pore size must be such that the growth of thin roots penetrated through the bag is restricted so as to keep the roots near the exterior bag surface. In other words, such a non-woven bag consists preferably of a porous non-woven fabric material, having its pore size and material selected in such a way that at least some of the plant roots are able to penetrate through said bag, yet the bag prevents those plant roots that have penetrated through the bag from growing far away from the bag. The manufacturing material of a non-woven bag is a so-called non-woven fabric, wherein the fabric has not been produced by weaving or knitting but by bonding fibers or filaments to each other mechanically, thermally, or chemically.

One significant further advantage gained by this type of non-woven bag is that the material for a growth medium present inside the non-woven bag can be selected quite arbitrarily, because the plant takes its nutrients by way of its roots extending at least partly outside the bag. As the growth medium can be selected with a relative freedom, it is possible to overlay one and the same plant wall with plants demanding quite highly diverse growth conditions.

Another advantage gained by the porous structure of a non-woven bag is that, by way of so-called root pruning, there is obtained a proportionally larger root system area compared to whole plastic or excessive aperture size cultivation containers.

In one preferred embodiment of the invention, the water present on the floor of a container element is allowed to evaporate outside the plant wall before more water and accompanying nutrients are pumped onto the container element's floor by way of a liquid inlet pipe.

As the plants are isolated within non-woven bags placed on the floor of container elements, and the floor of container elements is allowed to dry a little between watering cycles, there are created unfavorable growth conditions for the most common root diseases, i.e. for plant pathogens from the genera Pythium and Phytopthora (commonly known as root rot). Hence, these are not capable of growing a mycelium from plant to plant, and the breathability of non-woven bags ensures oxygen-rich root conditions, while these pathogens thrive explicitly in low oxygen conditions. The oxygen intake to the root system is also important for the growth of a plant by enhancing the intake of nutrients.

A further benefit gained by such a method, in which the floor of a container element has always a little drying spell between watering cycles, is the contribution of this to not allowing the roots to grow uncontrollably inside a container element, but being kept in the proximity of a non-woven bag.

In one preferred embodiment of the invention, the non-woven bag is made of a non-water-absorbent material, which is permeable to and retains water as well as nutrients dissolved in water. Preferably, the non-woven bag is made from a plastic-based material, which predominantly comprises polyolefin, polyester, polyamide or a mixture thereof, the material being preferably poly-lower alkylene, such as polypropylene, or a mixture of poly-lower alkylene, such as polypropylene, and polyester. Polypropylene is preferably so-called non-woven polypropylene, which is produced by bonding the long fibers to each other by means of heat. Within the non-woven bag manufacturing material may also be admixed organic non water-absorbent fibers, such as coconut fibers.

In the invention extends from a lower container element to an upper container element a liquid inlet pipe, which runs in conjunction with a liquid overflow pipe. Preferably, the liquid inlet pipe and the overflow pipe run within a common connecting pipe, which extends from the uppermost container element to a liquid tank present below the lowermost container element.

A benefit gained by the use of a connecting pipe is the capability of dismantling the irrigation system while the plant wall is standing and, in the case of a long wall, even from middle container elements without any trouble. Moreover, in the event of possible leaks, the leak remains on the inside of container elements instead of flooding the floor.

In the invention, the nutrients mixed with water (=nutrient solution) are conducted from the lowermost container element by way of an overflow pipe into the liquid reservoir and pumped from said liquid reservoir always after a specific period along the liquid inlet pipe/pipes extending in conjunction with the overflow pipe at least to the uppermost container element. Such a water circulation is completely closed as water only travels inside a structure (plant wall) made up by stacked container elements and a water reservoir with no possibility of seeping into the environment or wetting the surrounding places for example by trickling along the plant leaves outside the wall or by sprinkling uncontrollably

The overflow pipes of container elements and the liquid inlet pipes are designed for an orientation regarding the floor of container elements exactly for this purpose and for a minimum diameter of 11 mm, thereby avoiding salt blockages and improving the plant wall in terms of its operating reliability.

The invention further relates to a method of growing plants in a plant wall, having its non-woven bags provided with a plurality of plants. This method comprises at least the following steps of:
- placing at least one plant in a non-woven bag, said non-woven bag having been positioned on the floor of a container element in such a way that the stem of a plant set for growing in each non-woven bag extends upward from the floor of the container element, the manufacturing material of said non-woven bag being a so-called non-woven fabric, which fabric is produced from a porous plastic-based material by bonding long fibers or filaments to each other mechanically, thermally or chemically for giving a bag such an average pore density per unit area that the bag is permeable to both water and nutrients possibly dissolved in water, yet is capable of blocking the admission of light from above the top edge and the front flank wall by not less than 90% to the root system of a plant once the plant has its roots placed inside the bag, and
- feeding a nutrient solution to at least one container element (3) by way of a liquid inlet pipe/inlet pipes, such that most of the nutrient solution not consumed by plants in the uppermost container element is conducted by way of an overflow pipe gravitationally to a lower level container element. This kind of method is a hydroponic one.

Preferably, the selection of a growth medium positioned inside a non-woven bag, as well as the non-woven bag, is such that some nutrients will be retained by the non-woven bag and the growth medium contained therein. Depending on cultivated plants, the growth medium itself may retain and absorb moisture.

The use of such a nutrient solution recycling method, wherein a growth medium and a non-woven bag are selected in view of the non-woven nag not retaining water and nutrients present therein for a long time, provides a major benefit in the sense that there is hardly any excess nutrient solution remaining on the floor of container elements that could possibly serve as a growth medium for pathogens or microbes otherwise harmful to health.

The most relevant prior art to present invention is presented in FR 2956 946 (D1) and US 2011/258925 (D2). The plant wall disclosed in D1 have containers missing overflow pipe and plant substrate is added straight to bottom of a container and then kept moisturized by sponges. Missing overflow pipe may cause risk of overflowing, if the normal outflow pipe is blocked. The plant wall of D2 has several planters and each planter has several plant sections which are connected together. Each plant section has a face plate with orifice wherein plants can be mounted in. The plant bags used in this system are normal mesh-bags with wider openings. Using non-woven plant bags instead of mesh-bags in promoting plant health and pathogen-free plant wall. In picture 13 of D2 there has been presented a draining structure wherein drain ports 176, 178, 180 and also water supply pipe are close to each other. However, there is no teaching of providing water supply pipe in connection with the overflow pipe/flooding valve.

The invention and its various embodiments, as well as benefits gained by the invention, will now be described further with reference to the accompanying figures.
Fig. 1A shows one plant wall of the invention in a perspective view in a partially transparent condition.
Fig. 1B shows the plant wall of fig. 1A in a vertical section view from a direction 1B in fig. 1A.
Fig. 1C shows the plant wall of fig. 1A in a simplified vertical section view from a direction 1C in fig. 1A.
Fig. 1D shows the plant wall of fig. 1a in a view from behind.
Fig. 2A shows another plant wall of the invention in a view diagonally from the front.
Fig. 2B shows the plant wall of fig. 2A in a view diagonally from behind.
Fig. 2C shows an uppermost container element for the plant wall of fig. 1A in a perspective view.
Fig. 2D shows a liquid reservoir for the plant wall of fig. 2A in a perspective view.
Fig. 2E shows the plant wall of fig. 2A in a cross-sectional view from a direction 2E in fig. 2A.
Fig. 3 shows one end without a side wall for a container element of the plant wall of fig. 1A.
Fig. 4A shows still another plant wall of the invention in a perspective view.
Fig. 4B shows the plant wall of fig. 4A in a side view.
Figs. 5A-5C show one plant wall of the invention as well as a container element furnished with plants.
Figs. 6A-6D show the operation of a flooding valve 6.
Fig. 7 shows a plant wall with an overflow pipe and a liquid inlet pipe extending within one and the same connecting pipe.

What is reviewed first in the following is which aspect of the invention is detailed in each figure, as well as main structures depicted in the figures.

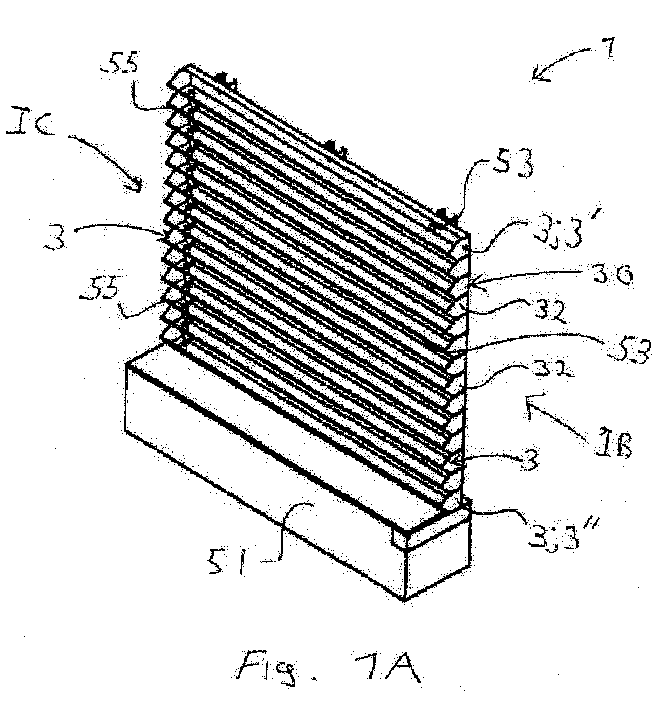

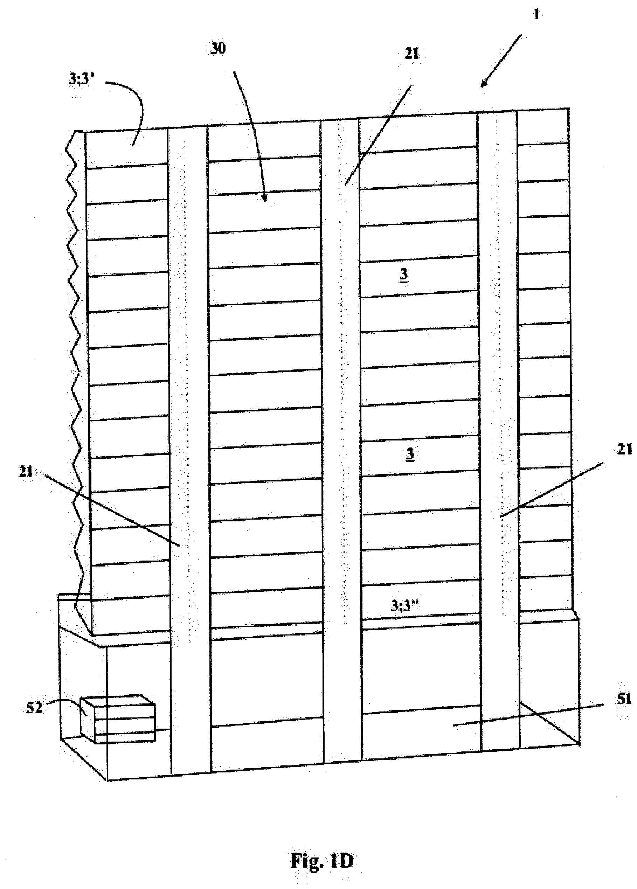

Figs. 1A-1D show a plant wall 1 according to one embodiment of the invention from various viewing angles. In the plant wall visible in figs. 1A-1D, it is the intention to pursue a hydroponic growing practice for plants, which is why the plant wall 1 is provided with a liquid circulation 5, including an appropriate manifold 57 to which are connected a liquid pump 52 present in a liquid reservoir 51 below container elements, liquid inlet pipes 53 extending to container elements 3, as well as overflow pipes 55 extending between and in communication with the container elements 3. In this embodiment, the plant wall 1 has a plurality of identical subjacent container elements 3, the floor of each container element 3 being provided with one or more non-woven bags produced from a porous material, such as so-called non-woven polypropylene. In the non-woven bags are placed the roots of plants selected each time for growing, such that at least a portion of the stem and some of the leaves of the plants extend outside the non-woven bag.

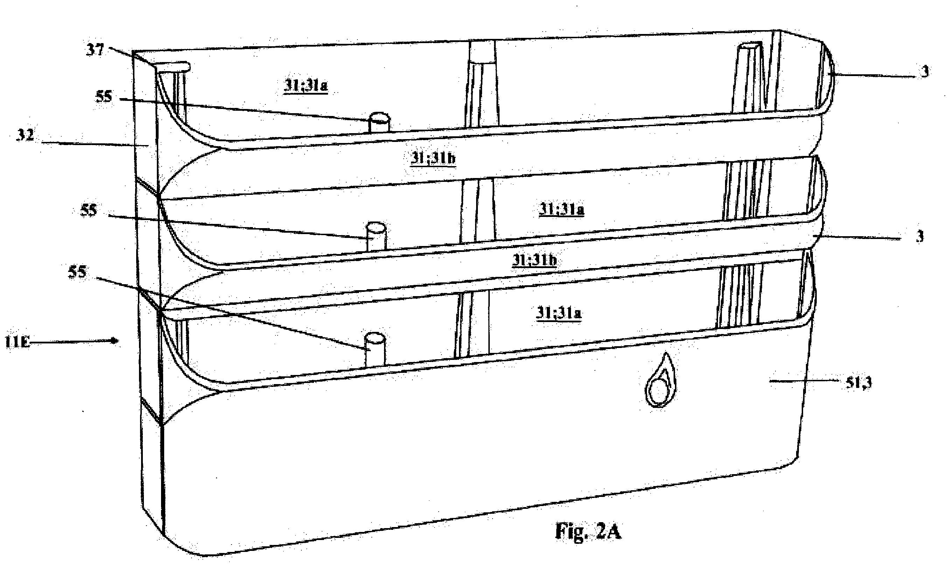

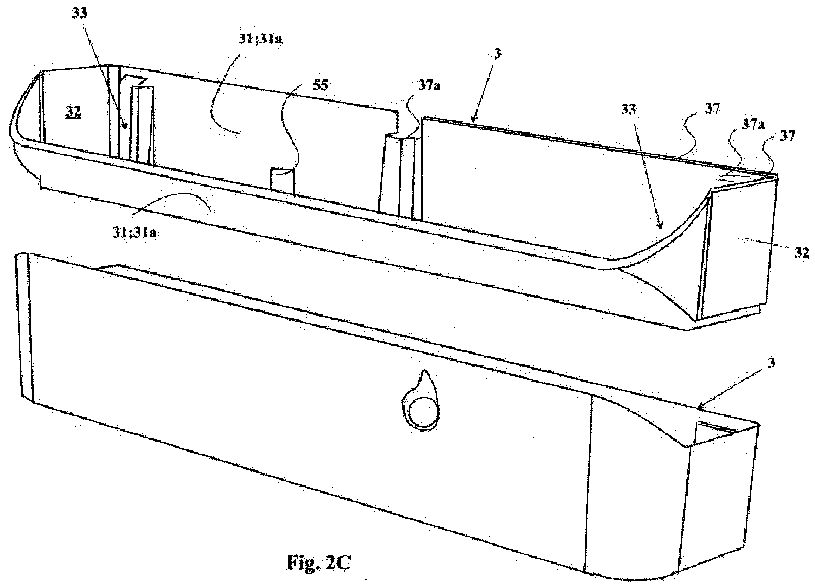

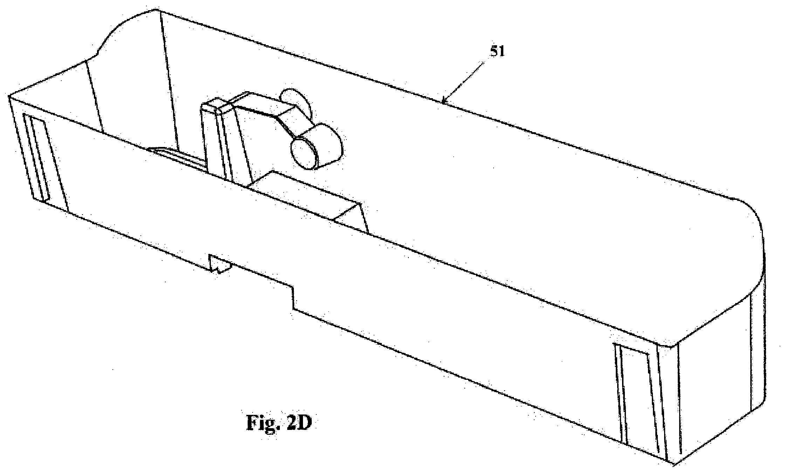

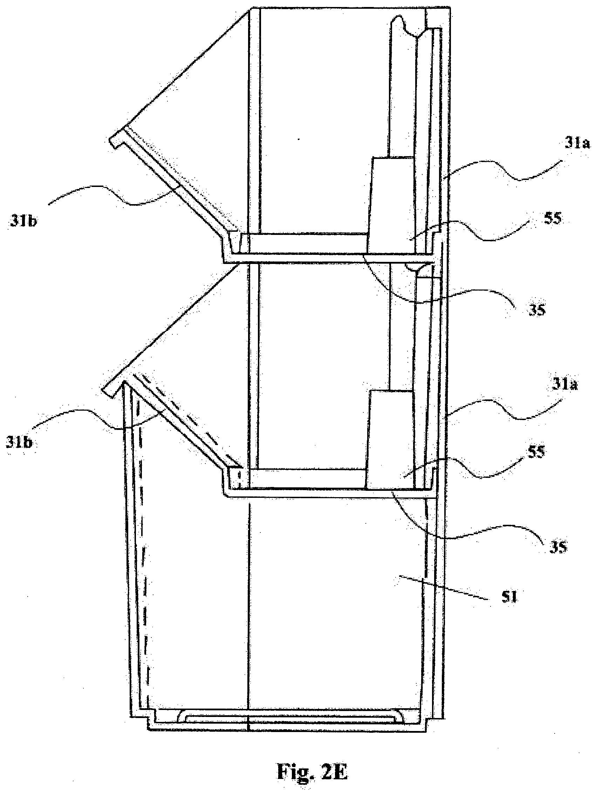

Figs. 2A-2B show a plant wall 1 according to a second embodiment of the invention from various viewing angles. Figs. 2C and 2D show respectively a design for the individual container element 3 as well as a design for the liquid reservoir 51 of such a plant wall. Fig. 2E further shows a cross-section of the plant wall of fig. 2A in a side view.

In this second embodiment of the invention, the plant wall 1 has again a plurality of subjacent container elements 3, the floor of each container element 3 being provided with one or more non-woven bags produced from a porous material and in those are placed plants selected each time for growing. In this case, however, the container elements 3 are not supplied by any actual liquid circulation 5 for nutrients, but the nutrients, and possibly also the irrigation water, are introduced directly into the containers manually and between two superimposed container elements 3; 3' and 3; 3" exists an overflow pipe 55 as does between the lowermost container element 3" and the liquid reservoir 51. The overflow pipe operates here on a flooding method, i.e. when the water surface in an upper container element rises to an excessive level as seen from a floor 35, the liquid opens a valve at the end of the overflow pipe and the excess liquid is allowed into a lower container element or into the liquid reservoir 51 in the case of the lowermost container element 3".

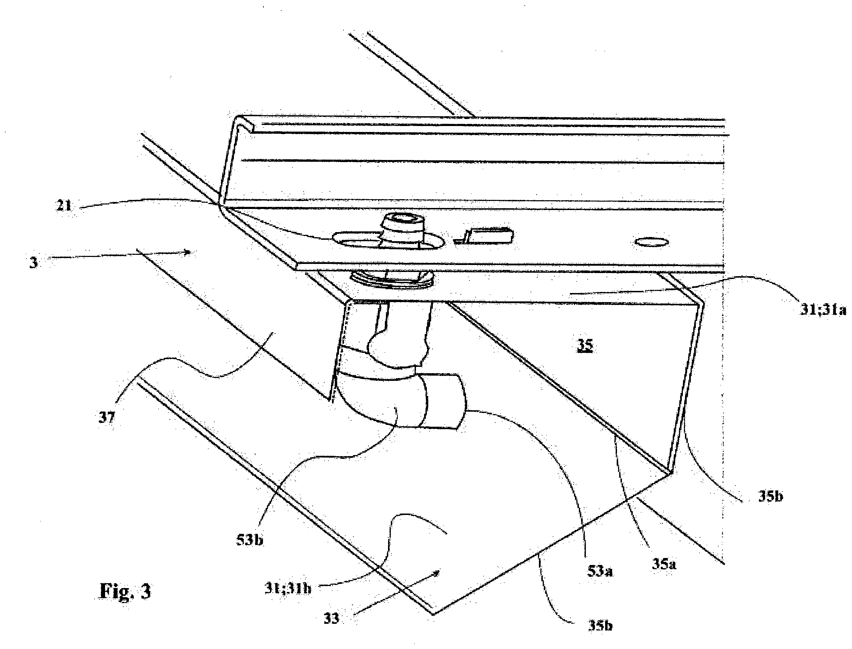

Fig. 3 shows in more detail some of the design for an end 33 of one container element 3, as well as a liquid inlet pipe 53 which opens into said end of the container element 3. The figure shows the end 33 with an end panel 32 removed.

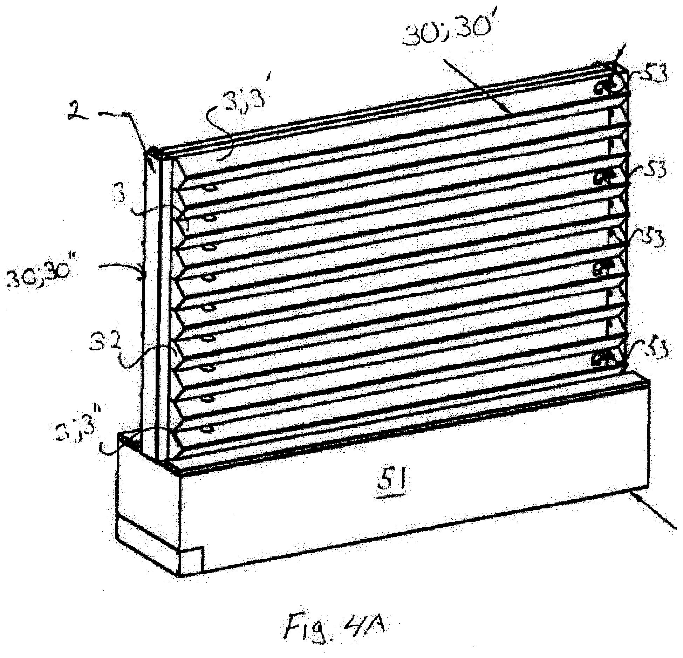

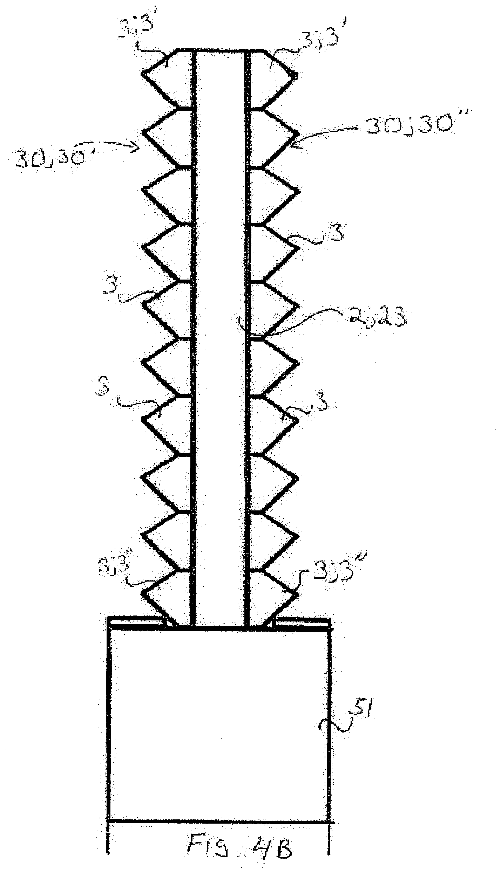

Figs. 4A and 4B show a pair of plant walls according to yet another embodiment of the invention, both of which are intended for hydroponic cultivation. In this embodiment, on either side of a panel type frame 2; 23 is mounted a container wall 30; 30' and 30; 30" constituted by container elements tacked below each other. Each container wall 30; 30' and 30; 30" is structurally similar to the embodiment of the invention shown in figs. 1A-1E. The liquid circulation 5 of each container wall is otherwise similar to what is depicted in the plant wall 1 of figs. 1A-1E, except that this time nutrients are pumped with the same pump or separate pumps into the container elements 3 of both container walls 30; 30' and 30; 30". As shown in figs. 4A and 4B, the plant walls 1; 1' and 1; 1" mounted on one and the same frame member 2 have below the respective container walls 30; 30' and 30; 30" a common liquid reservoir 51, which is located below the lowermost container element 3; 3' of each container wall 30; 30' and 30; 30".

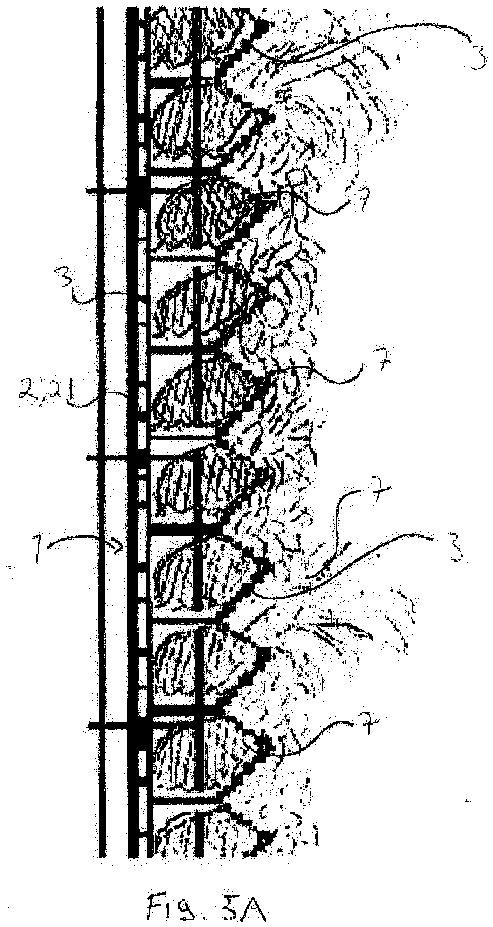

Fig. 5A shows a plant wall 1 in a side view with at least one plant 7 placed in each of its container elements 3.

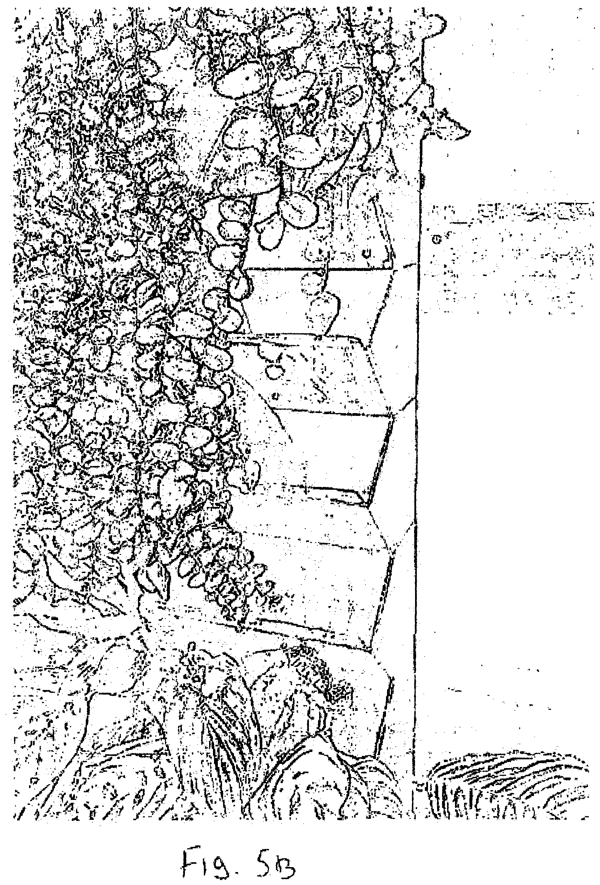

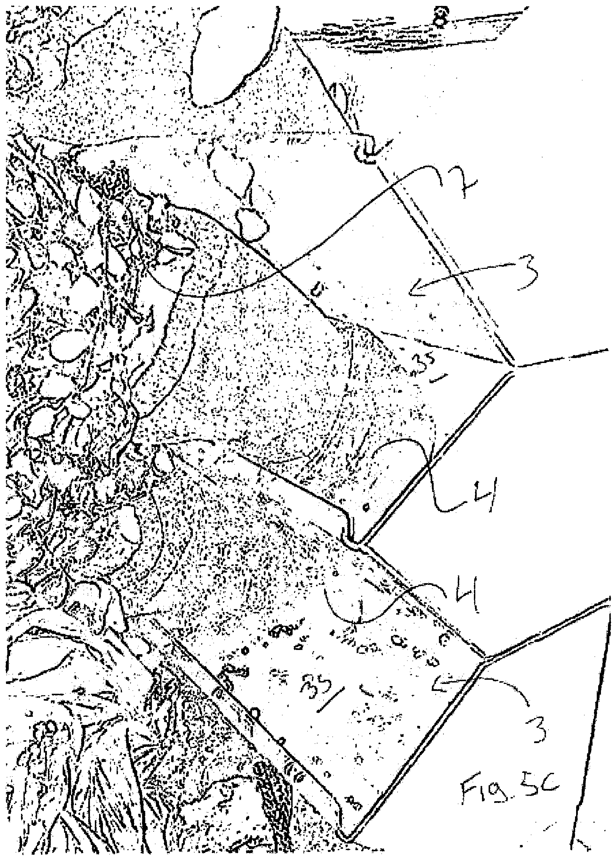

Figs. 5B and 5C show container elements 3 with plants 7 in non-woven bags 4 placed on a floor 35 thereof.

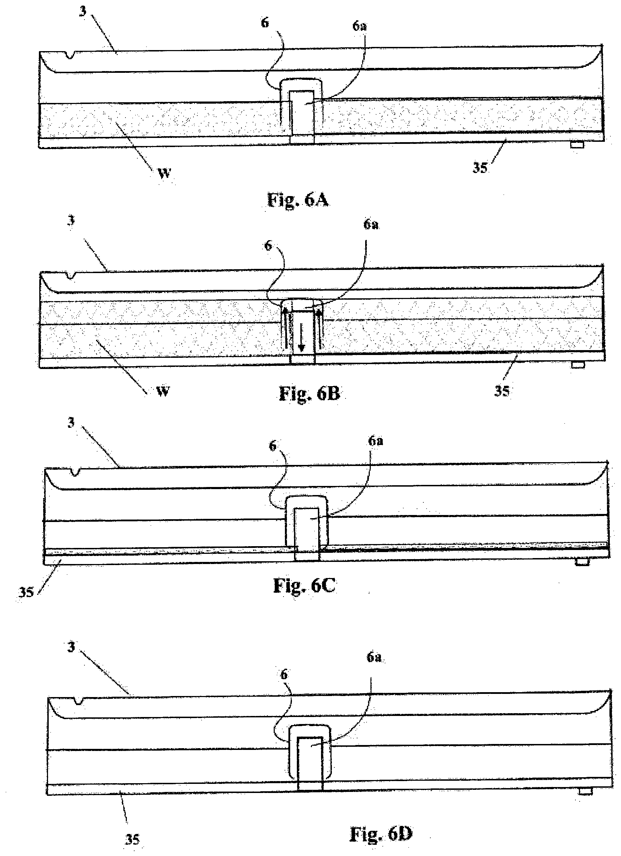

Figs. 6A-6D show the operation of a flooding valve 6.

The invention will now be described in even more detail with reference to the accompanying figures, as well as to the foregoing general type description of the figures.

The plant wall 1 according to the invention comprises a plurality of stackable, elongated container elements 3, whereby inside each container element 3 (on the floor 35) can be placed at least one plant for growing. In the plant wall 1, the roots of each plant mounted for growing can be accommodated inside a non-woven bag 4 provided with small perforations, said bag 4 having been produced from a porous plastic-based nonwoven fabric material, which is permeable to both water and nutrients possibly dissolved in water, yet is not itself substantially water absorbent. Each non-woven bag 4 is capable of being positioned inside the container element 3 in such a way that the stem of each plant fitted in the non-woven bag 4 for growing is directed upward from the floor 35 of said container element 3.

The plant wall 1 may comprise a container wall 30 suitable for hydroponic growing or conventional soil growing in combination with either nutrient or water circulation, respectively. The plant walls shown in figs. 1A-1E and 4A-4B are primarily applicable to hydroponic growing, while the plant wall shown in figs. 2A-2E is applicable to both soil growing and hydroponic growing. The container wall 30 consists of stacked elongated container elements 3, wherein each container element 3 of the container wall is positioned by way of its floor either on top of a container support of the container element immediately below or, in the case of the lowermost container element, it has been positioned on top of a liquid reservoir 51 present there below.

Each container element 3 consists of a floor 35 with its edges encircled by panel type walls 31, 32 rising from a level of the floor 35. In terms of its shape, the floor 35 is for example rectangular, i.e. it is elongated, whereby its longitudinal flank sides 35a are considerably longer than its lateral end sides 35b. The panel type walls associated with the floor's flank sides 35a make up mutually opposite flank walls 31. A rear flank wall 31a connects to the floor preferably at an angle of 90 degrees and a front flank wall 35b at an angle of about 20-50 degrees, preferably at an angle of about 30-45 degrees. Both in the embodiment of the invention shown in figs. 1A-1D and 3 and in the embodiment of the invention shown in figs. 4A-4B, the front flank wall 31; 31b of a container element connects to the floor at an angle of about 45 degrees. Thus, said flank wall 31b extends at an angle of about 45 degrees upward from the floor level and at the same time away from the rear flank wall 31a. The rear flank wall 31; 31a is directed directly upward, i.e. at about a right angle relative to the floor 35 in all embodiments of the invention. In the embodiment of the invention shown in figs. 2A-2E, the front flank wall 31; 31b of a container element 3 connects to the floor at an angle of about 30-45 degrees, extending upward from the floor level and simultaneously away from the rear flank wall 31a.

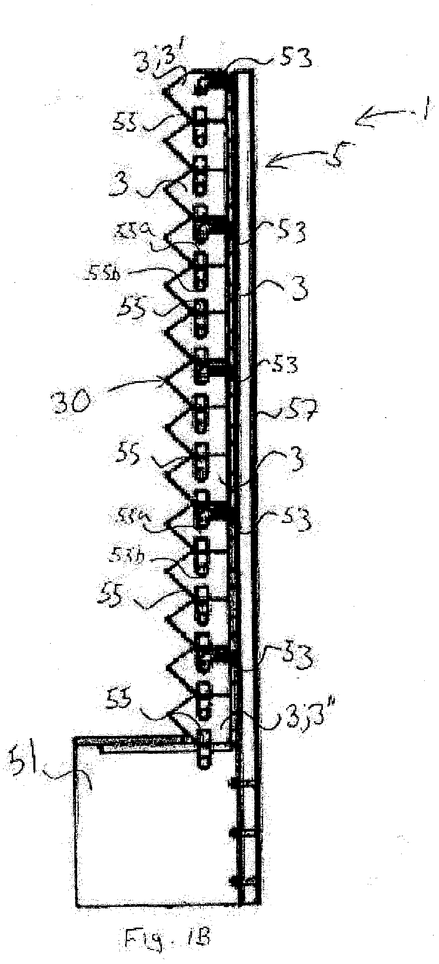

In the embodiment of the invention shown in figs. 1A-1E and 3, as well as in the embodiment of the invention shown in figs. 4A-4B, each container element 3 has what in a view from the floor is the top edge of its rear flank wall 31; 31b formed with a container support 37 by bending said top edge 90 degrees towards the opposite front flank wall 31; 31b or in horizontal direction towards the interior of a container element and by continuing the top edge extension to match the end sides 35b of the floor 35 in length (cf. for example figs. 3 and 1B). On top of the obtained container support 37, which is associated with a top edge of the rear flank wall 31a, and which is horizontal and in the container element's longitudinal direction equal in length to the rear flank side 31; 31a, can be rested the floor 35 of an upper container element. The front and rear flank walls 31; 31b, 31a of a container element 3 are interconnected by panel type end walls 32 or end panels, present at both ends 33 of the container element 3 and connected at a right angle to the end sides 35b of the floor 35. Hence, each end wall 32 extends in vertical direction from the floor all the way to the container support 37. In the lateral direction of each container element 3, i.e. in a lengthwise direction of the end panels 32, the container support 37 has such a length that between a free front edge of the container support 37 and a free top edge of the front panel type flank wall 31; 31b is left an appropriate void space or opening 38, allowing the stems of plants to rise above the free front edge of the container support 37 and the free top edge of the front panel type flank wall 31; 31b. Consequently, the container element is open upward, enabling the evaporation of moisture from inside the container element. On the container element's floor 35 can be placed a non-woven bag 4 for growing the plants. As pointed out above, the stems of plants pushing upwards from a non-woven bag 4 are able to rise above the free top edge of the container element's front flank wall 31; 31b and the free front edge of the container support 37 as seen from the floor 35 of the container element 3.

In the embodiment of the invention shown in figs. 2A-2E, the front flank wall 31; 31b of a container element 3 connects to the floor 35 of the same container element at an angle of about 30-45 degrees while extending upward from the floor level and simultaneously away from the rear flank wall 31; 31a. In the embodiment of the invention shown in figs. 2A-2E, the container element 3 has its flank walls 31 interconnected by upward directed panel type end walls 32 or end panels, present at both ends of the container element 3 and associated with the end sides 35b of the floor 35. The end panels 32 connect at a right angle to the rear flank wall 31; 31a, but in a slightly curved fashion to the front flank wall 31; 31b. The container support 37 is now made up by a straight top edge of the rear flank wall 31; 31a, as well as by straight portions of the end walls 32 associated with the rear flank wall 31b. The container support also includes auxiliary supports 37a visible in fig. 2C and associated with the rear flank wall of a container element. In the embodiment of the invention shown in figs. 2A-2E, the floor of each upper container element is simply rested upon each lower container element's container support 37, including also a plurality of auxiliary supports 37a. The lowermost container element 3; 3" rests by way of its floor 35 upon the top edge of an appropriately designed liquid reservoir 51.

The superimposed container elements 3 may be coupled to a bracing frame member 2 from the rear flank wall 31a of each container element 3. In the embodiment of the invention visible in figs. 1A-1D, the container elements 3 are coupled by the rear flank wall 31a thereof to a plurality of upright members 2; 21, by way of which the container wall 30 made up by the container elements 3 and the frame member 2 thereof can in turn be coupled for example to the walls of a space. In the embodiment of figs. 4A-4B, which comprises two container walls 30; 30', 30", between the container walls 30; 30' and 30; 30" there is always a frame panel 2; 23 to which each container element 3 of the container wall 30 is fastened by its rear flank side 31; 31a. The identical container walls 30; 30' and 30; 30" coupled to the frame panel 2; 23 have a common liquid reservoir 51 below the lowermost container element 3; 3".

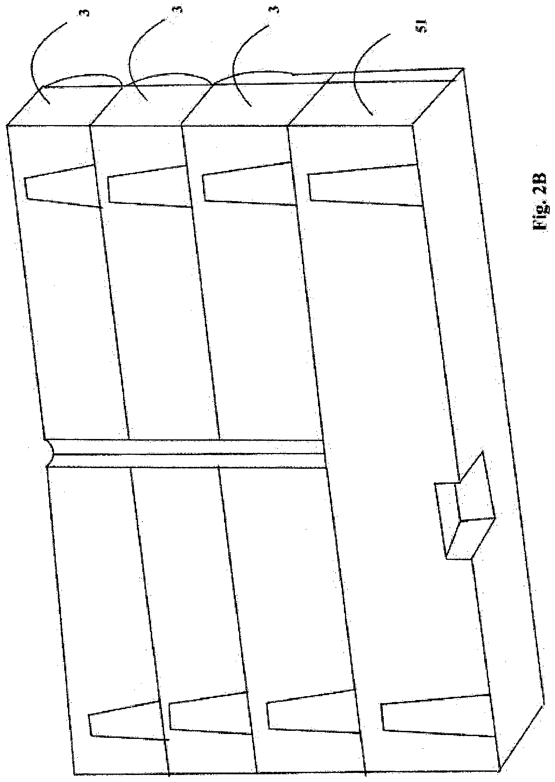

In the event that a container element 3 is provided with a liquid inlet pipe 53, the latter generally opens into either one of the ends 33 of the container element 3, close to the end panel 32 as illustrated in fig. 3, because the container element 3 has its longitudinal end, which is opposite as seen from the end on the side of the inlet pipe 53, provided with an overflow pipe 55 capable of establishing a liquid connection between two subjacent container elements 3. Fig. 3 shows how the liquid inlet pipe 53 opens into the end 33 of a container element with a body 53a of the inlet pipe passing through the rear panel type flank side as well as the frame member of the container element. In a first embodiment of the invention, depicted in figs. 1A-1E, the liquid inlet pipe 53 is a component of the liquid circulation 5, whereby nutrients are dispensed at specific intervals onto the floor 35 of the container element 3 by using appropriate automatics that comprises a data processing unit as well as a logic for implementing a liquid circulation (not shown in the figures). However, if the plant wall 1 does not include a nutrient circulation as possible for example in the plant wall of fig. 2; the liquid inlet pipe 53 is linked either directly to water mains or to the liquid reservoir 51 for dispensing water thereby. In this case, the nutrients required for the plants are rationed for example manually directly to the plants present in bags located on the floor 35 of the container elements 3.

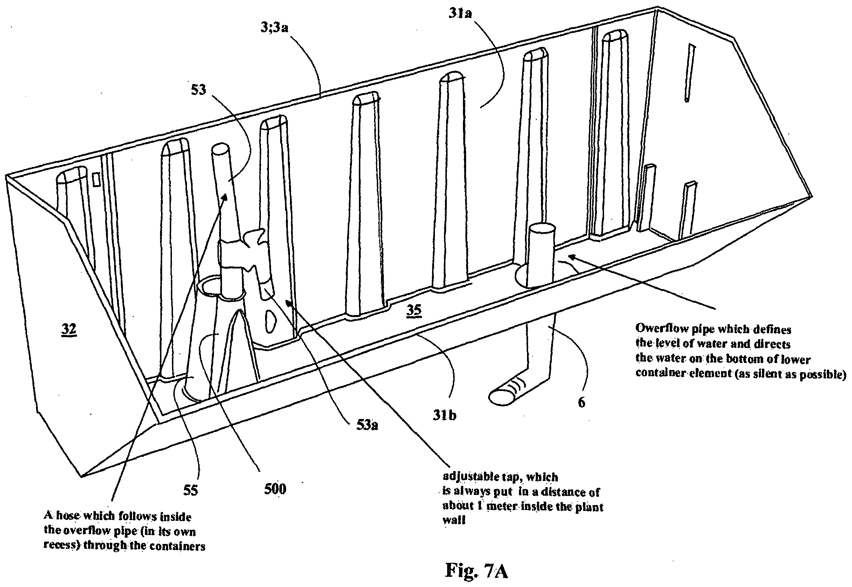

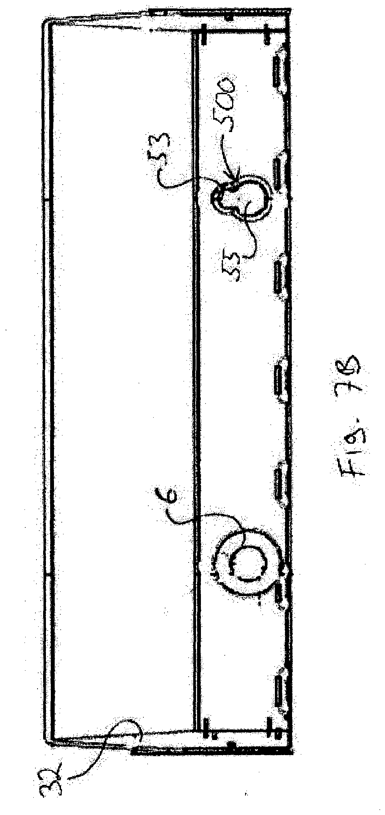

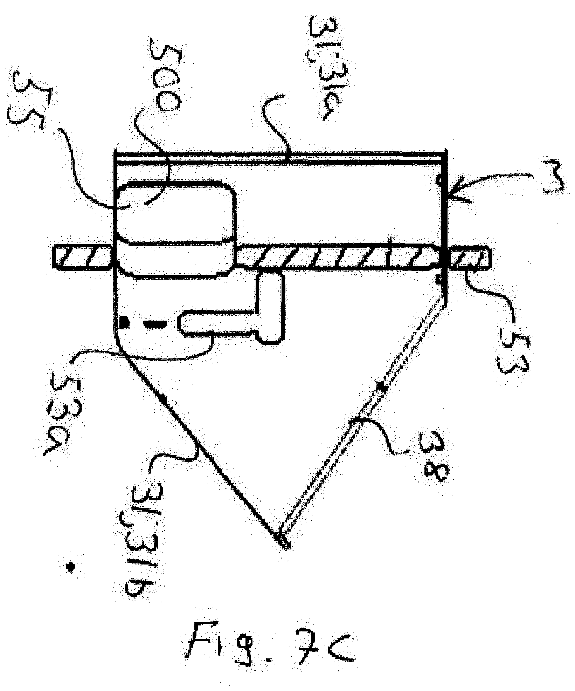

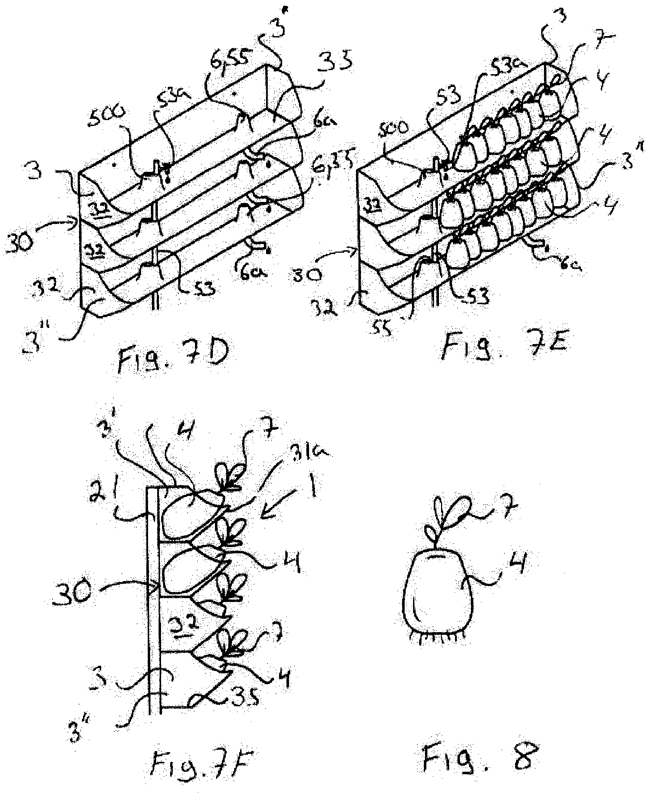

In the embodiments of the invention shown in figs. 1A-1D as well as 4A-4B, the uppermost container element 3; 3' is provided with a liquid inlet pipe 53. Subsequently, at least every third subjacent container element 3 is provided with a liquid inlet pipe 53 as seen from said uppermost container element 3; 3'. Preferably, the liquid inlet pipe 53 extends in conjunction with the overflow pipe 55 in a common connecting pipe as shown in figs. 7A and 7B.

In the embodiment shown in figs. 2A-2E, which is applicable for either hydroponic growing or soil growing, it is a common practice to provide every container element 3 with a liquid inlet pipe (not shown in the figures).

The container elements 3 are also provided with at least one liquid overflow pipe 55 capable of establishing a liquid connection between two subjacent container elements. The overflow pipe 55 has its upper outlet port 55a opening into the interior of an upper container element 3, generally close to the end 33 of said container element. The overflow pipe 55 has a top portion of its body 55c passing through the floor 35 of an upper container element. Depending on where the overflow pipe 55 has its inlet port 55b located with respect to the floor 35 of a lower container element, the bottom end of its body 55c will be extended from the floor of an upper container element directly to the proximity of the floor of a lower container element. Preferably, the liquid inlet pipe 53 runs together with the overflow pipe 55 in a single common connecting pipe 500 as shown in figs. 7A and 7B.

Alternatively, the overflow pipe has a bottom end of its body 55c extended either through the container support 37 or between a forward edge of the container support 37 and a free forward edge of the front flank side 31; 31b to the proximity of the end 33 of a lower container element.

The overflow pipe 55 has its inlet port 55b opening into the interior of a lower container element, often close to one end 33 thereof. The overflow pipe 55 has its outlet port 55a generally at a slightly higher level than the floor 35 of an upper container element 3 to avoid blocking the outlet port 55a of the overflow pipe 55. The outlet port 55a of an overflow pipe is either fitted with an appropriate valve capable of having liquid discharged in a controlled manner at specific time intervals or else the outlet port is fitted with a valve which opens as the surface of liquid, as seen from the bottom, rises above a specific level (a flooding valve 6a). On the latter occasion, the overflow pipe is referred to as a flooding pipe.

The lowermost container element 3; 3" is in liquid connection by way of the overflow pipe 55 with a subjacent liquid reservoir 51 containing either irrigation water or a nutrient solution. The liquid reservoir 51 both supports the container wall 30 from below and works also as a liquid storage, whereby, in terms of its width and length, it is at least equal to the respective dimensions of the container elements' floor 35.

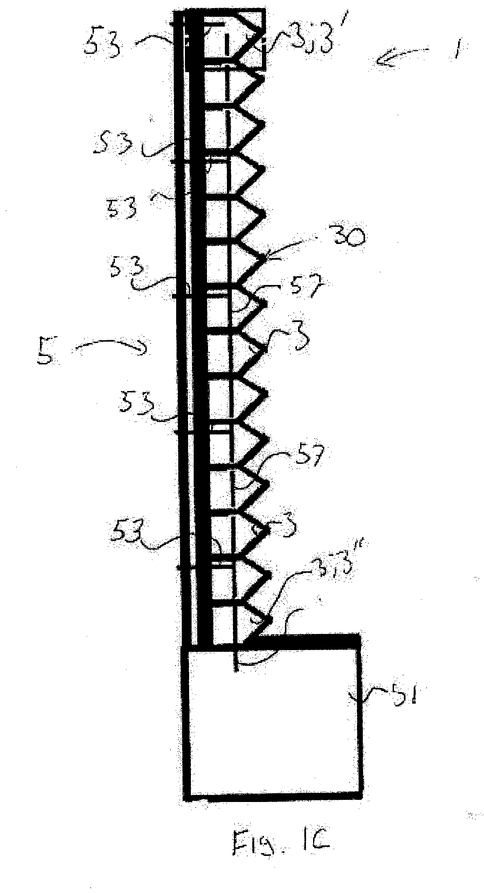

The nutrient solution has a composition, which is conventional as such and which depends on what type of plants are grown with the container elements 3 of the plant wall 1. Inside the liquid reservoir 51 is at least one liquid pump 52, which is/are used for pumping water or a nutrient solution by way of an appropriate manifold 57 to liquid inlet pipes 53. The manifold 57 is extended from the liquid reservoir 51 to the liquid inlet pipes 53 generally from behind the container elements 3 of the plant wall 1 as shown in fig. 1B, provided that the container elements are coupled by the rear flank side 31a thereof to the upright members 2; 21 as shown in figs. 1B, 1C and 1E. In this case, the manifold 57 is extended from the liquid reservoir 51 to the inlet pipes 53 by way of the upright members 2; 21. In the embodiment of the invention shown in figs. 4A and 4B, the manifold 57 is extended from the liquid reservoir 51 to the inlet pipes 53 from inside a common panel type frame 2; 23, said frame 2; 23 having both container walls 30; 30' and 30; 30" fastened thereto.

The non-woven bags 4 are placed on the floor of container elements and are provided with plants intended for growing. The container elements are open upward, thus enabling the evaporation of moisture from inside the container elements. However, there will be liquid and moisture remaining on the floor 35 of container elements 3, the plants developing particularly downward water roots which penetrate through small perforations present in the bottom of a non-woven bag 4. However, the non-woven bag perforations are sufficiently small to restrict the growth of outwardly pushing roots, and those roots that have penetrated through the bag remain close to an external wall of the non-woven bag 4.

The selection of non-woven bags is indeed influenced by a microclimate inside the container elements as well as by the ability of light to work its way to the floor of container elements as the container elements are open upward. Conveniently, the non-woven bag 4 is made from a plastic-based fabric, which primarily comprises air- and water-permeable polyolefin, polyester, polyamide or a mixture thereof. Preferably, the material is poly-lower alkylene such as polypropylene, especially so-called nonwoven polypropylene. The non-woven bag has small perforations or pores, such that the water penetrated inside the bag remains for some time inside the bag (water is left for about 10-30 seconds, preferably about 10-20 seconds, inside the bag).

The bag material has such a pore density and thickness that the bag only transmits about 5-10% of the daylight which has arrived at the floor of a lower container element by way of a gap between two superimposed container elements. In hydroponic growing, the growth medium for plants is such that the medium itself does not absorb nutrients in any case but may nevertheless absorb water, and the growth medium is placed in a non-woven bag 4. Suitable in hydroponic growing are water-lifting, roots-of-the plant bracing materials, such as for example perlite, stone wool and activated carbon, as well as water-absorbent light expanded clay aggregate, yet without being limited to those. In terms of culture materials suitable for hydroponic growing, reference is indeed made to the prior art. The plant wall 1 according to the invention also enables the use of a growth medium which comprises conventional topsoil or a soil mixture for example with sand, in which case the growth medium is placed either directly on the floor of a container element or in a non-woven bag.

There are slightly dissimilar practices for administering nutrients for plants included in the plant wall 1, depending on whether the question is about a plant wall as shown in figs. 2A-2E, in which the container elements are not fastened to a frame structure and which is appropriate both for traditional soil growing and for hydroponic growing (growing in water), or whether the question is about a plant wall intended solely for hydroponic growing of the types shown in figs. 1A-1D and 4A-4B.

In the plant wall 1 shown in figs. 1A-1D and 4A-4B, the nutrient solution is conducted from the lowermost container element 3; 3" by way of an overflow pipe 55 into a liquid reservoir 51 and pumped from said liquid reservoir always after a specific period of time back into a manifold 57 included in a liquid circulation 5, and further along liquid inlet pipes/an inlet pipe 53 to the uppermost container element 3', and further, considered downward therefrom, onto every third container element by way of the liquid inlet pipe 53. As soon as a liquid nutrient solution has been conducted onto a floor 35 of the container element 3, the plant, which has been placed on the container element's floor 35 and is present in a non-woven bag, takes up some of the nutrient solution by its roots through the porous wall of the non-woven bag 4. Because the non-woven bag consists of porous, water non-absorbent, so-called nonwoven polypropylene or the like material, the water or water-soluble nutrients contained in the nutrient solution are not substantially absorbed into the non-woven bag 4. The non-woven bag 4 retains some water and nutrients therein, yet prohibits almost completely the admission of daylight to the roots. It has its pore size and pore density per unit area of bag material preferably dimensioned in such a way that the bag
a) prevents by more than 90%, preferably by more than 95%, the light that arrives by way of an opening between two container elements from reaching the plant roots present in a bag located on the floor of a lower container element,
b) retains the free water present inside the bag for a few tens of seconds, preferably for 10-20 seconds.

After this, the main portion of nutrient solution, which has not been consumed by plants in an upper container element, is conducted periodically by way of the overflow pipe 55 gravitationally onto a lower container element.

In the plant wall shown in figs. 2A-2E, the nutrient solution is rationed manually onto the floor of container elements, from where the plants present in non-woven bags 4 take up the nutrients required thereby. The water is apportioned either manually or by means of a pump (not shown in the figures) present in the liquid reservoir 51 for each container element. In case the water level exceeds a specific upper limit in container elements, as regarded from the floor 35 of the container elements 3, this results in the opening of a flooding valve 6 included in the overflow pipe or flooding pipe leading to a lower container element.

Figs. 7A-7F depict a preferred embodiment of the invention, wherein between every two stacked container elements 3 of a plant wall extends a connecting pipe 500 in the shape of a keyhole. The connecting pipe 500 extends from a liquid reservoir 51 to the proximity of the floor of an uppermost container element 3'. Within the connecting pipe 500 runs an overflow pipe 55 by means of which the upper and lower container elements are in liquid communication with each other, such that the liquid passes along the overflow pipe from a floor 35 of the upper container element onto the lower container element, preferably onto or to the proximity of a floor 35 of the lower container element. From a lowermost container element 3; 3" the liquid proceeds into the liquid reservoir 51. Alongside the connecting pipe 500 runs a furrow, in which is adapted to run a liquid inlet pipe 53 extending from the liquid reservoir 51 to the floor of the uppermost container element 3; 3'. Water, along with nutrients present therein, travels from the liquid reservoir onto the floor of the uppermost container element. The inlet pipe 53 can also be implemented to include diverging valve-equipped faucets opening onto the floor of a few or each of the container elements, enabling the allotment of water and nutrients to the proximity of the floor of a desired container element 3. Alternatively, onto the floor or to the proximity of the floor of each container element 3 may also extend a separate liquid inlet pipe 53 from the liquid reservoir 51, said container element-specific inlet pipe running within the connecting pipe 500 or in the immediate vicinity of the overflow pipe 55. An advantage gained by using the connecting pipe 500 is the ability to dismantle the irrigation system while the plant wall is standing and, in the case of a long wall, even from the centrally located container elements without any trouble. Also, in a possible occurrence of leaks, the leak stays inside the container elements instead of spilling onto the floor.

From figs. 7E and 7F can be seen arrangements of plants 7 in container elements. As shown in fig. 7F, the plant has its roots placed in a non-woven bag set on the floor of a container element and the plant 7 has its stem sprouting outside a plant wall 30 by way of an opening 38 between a free forward edge of the container element's front flank side 41a and a free edge of the container support 37.

The operation of a second overflow pipe with a flooding valve 6 is illustrated more specifically in figs. 6A-6D, in which is shown a container element 3 provided with the flooding valve 6. Using the flooding valve 6 in a plant wall of the invention is not mandatory, but it is employed should it be desirable to make sure that the plant wall is able to function even when the first overflow pipe 55, which runs along with the liquid inlet pipe 53, becomes clogged for one reason or another.

As the surface of water W rises to reach the level of pipe 6a present inside the flooding valve 6 of the second overflow pipe, the water starts running on a siphon principle along said pipe 6a onto a container element immediately below the container element 3 or into the reservoir 51. The surface of water W is left at a level in which the valve terminates and, depending on the elevation of a draining hole in the pipe 6a, there will remain either about 2 cm (fig. 6C) of water or no water at all (fig. 6D), depending on the intended use. Another function of a pipe draining hole to drain the reservoir 51 in the event that the siphon does not start working, but the surface of water W is left below an upper edge of the pipe 6a.

Fig. 8 further shows a porous non-woven bag 4 used in the invention. The non-woven bag has a density of about 120 g/m² consistent with DIN standard EN 29073-1, and it is manufactured from nonwoven polypropylene fiber by bonding the fibers to each other thermally and mechanically. The plant 7 has its small roots penetrating through the non-woven bag 4, but the larger ones remain inside the bag. Since the non-woven bag is positioned on the floor 35 of a container element 3 and the irrigation is conducted by way of an inlet pipe 53 in such a way that the floor 35 is always allowed to dry a little between irrigation times, the atmospheric oxygen prevents the roots from extending too far from the bag.

Some aspects of the invention have been examined above with the figures, yet it is obvious for a man - and a woman - skilled in the art that there is a multitude of other ways of implementing the invention. Hence, for example the mouth of a non-woven bag can be equipped with a tie string or the like for tightening the bag mouth against the stem of a plant, thereby blocking the admission of light by way of the bag mouth to the roots. The string also prevents the growth material from scattering down for example in the incident of collision or wobble.

The porous non-woven bag used in the invention creates a direct capillary connection between the water on a container element's floor and the growth material in a non-woven bag. Thus, it is by virtue of the capillary (and water retention) characteristics of a growth medium that the growth medium can be selected for all types of plants. In addition, it is the density of a non-woven bag which also enables the use of most finely divided growth media.

**List of reference numerals**

| | |
|---|---|
| Plant wall | 1 |
| Frame structure | 2 |
| upright members | 21 |
| panel type frame | 23 |
| Container wall | 30 |
| Container element | 3 |
| flank wall(s) | 31 |
| rear flank wall | 31a |
| front flank wall | 31b |
| end | 33 |
| end wall(s) | 32 |
| floor | 35 |
| floor flank side | 35a |
| floor end side | 35b |
| container support | 37 |
| auxiliary support | 37a |
| container element opening | 38 |
| Non-woven bag | 4 |
| Liquid circulation | 5 |
| liquid reservoir | 51 |
| pump | 52 |
| liquid inlet pipe | 53 |
| inlet pipe supply port | 53a |
| inlet pipe body | 53b |
| overflow pipe | 55 |
| overflow pipe outlet port 55a | |
| overflow pipe inlet port 55b | |
| overflow pipe body | 55c |
| connecting pipe | 500 |
| manifold | 57 |
| Flooding valve | 6 |
| Flooding valve pipe | 6a |
| Plant | 7 |
| Water | W |

## Claims

1. A plant wall (1), comprising a plurality of stackable, elongated container elements (3), and a plurality of non-woven bags (4), whereby inside each container element (3) can be accommodated at least one plant for growing, such that the roots of each plant set for growing are introducible inside a non-woven bag (4) provided with pores, each container element (3) comprising an elongated receptacle provided with a floor (35), said floor having its laterally directed end sides (35b) fitted with upward directed end walls (32) and its longitudinally directed flank sides (35a) fitted with upward directed flank walls (31), comprising a rear flank wall (31a) that extends at an angle of about 90 degrees upward from a level of the floor (35), as well a front flank wall (31b) that extends at an angle of about 20-50 degrees, preferably at an angle of about 30-45 degrees, upward from the floor level and at the same time away from said rear flank wall (31a), said rear flank wall (31b) having its top edge formed with a container support (37) extending in the plane of the rear flank side's top edge towards the opposite front flank wall (31b), such that upon said container support (37) can be seated the floor (35) of an upper container element (3) located above said container element (3) in such a way that the upper container element and the lower container element (3) extend lengthwise co-directionally, the container support (37) having such a length in the lengthwise direction of the end walls (32) that between a free edge of the container element's container support (37) and a top edge of the front flank wall (37a) is left what in a view upward from the container element's floor is a void space or opening (38), **characterized in that**
- each non-woven bag (4) is capable of being positioned inside a container element (3), on the floor (35) of said container element, such that the stem of a plant set in each non-woven bag for growing extends upward from the floor (35) of the container element, the manufacturing material of said non-woven bag (4) consists of a so-called nonwoven fabric, wherein the fabric is produced from a porous plastic-based material by bonding long fibers or filaments to each other mechanically, thermally and/or chemically in such a way that the bag has such an average pore density per unit area that the bag (4) is permeable to both water and nutrients possibly dissolved in water, yet is capable to retain water for more than ten seconds in a wet condition, as well as is capable of blocking the admission of light from the area between the top edge and the front flank wall by not less than 90% to the root system of a plant once the plant has its roots placed inside the bag, and
- there is a liquid connection from the upper container element to the lower container element by way of a first overflow pipe (55) as well as a possible second overflow pipe (55) fitted with a flooding valve (6), and
- from the lower container element extends to the upper container element a liquid inlet pipe (53) running in conjunction with the first overflow pipe (55).

2. A plant wall (1) according to claim 1, comprising also, inside each container element (3), at least one plant for growing, such that the roots of each plant have been introduced inside a non-woven bag (4) provided with pores, **characterized in that** each non-woven bag (4) has been placed inside a container element (3), on the floor (35) of said container element, such that the stem of a plant introduced in each non-woven bag for growing, extends upward from the container element's floor (35).

3. A plant wall (1) as set forth in claim 1 or 2, **characterized in that** the non-woven bag (4) is made from a plastic-based fabric, which consists predominantly of non-water absorbing and air transmitting polyolefin, polyester, polyamide or a mixture thereof, the fabric material preferably consisting of poly-lower alkylene such as polypropylene.

4. A plant wall (1) as set forth in claim 3, **characterized in that** the non-woven bag (4) is made from thermally interbonded, moderately long, essentially non-water absorbent fibers, preferably from thermally interbonded poly-lower alkylene fibers such as polypropylene fibers, and the growth medium intended for each plant is placed entirely or for the most part inside the non-woven bag (4) intended for said plant.

5. A plant wall (1) as set forth in any of the preceding claims, **characterized in that** the non-woven bag (4) is provided with bag-penetrating pores, such as small perforations, and the material for the non-woven bag (4) has been selected in view of enabling at least some of the small roots of a plant to penetrate said bag (4).

6. A plant wall (1) as set forth in any of the preceding claims, **characterized in that** the container element (3) is provided with a liquid inlet pipe (53), which extends alongside the liquid overflow pipe (55) or in a connecting pipe (500) together with the overflow pipe (55).

7. A plant wall (1) as set forth in claim 6, **characterized in that** the liquid overflow pipe (55) has its upper outlet port (55a) opening onto the level of the floor (35) of an upper container element or slightly above the level of the floor (35), and the overflow pipe (55) has its lower inlet port (55b) opening into the proximity of the floor (35) of a lower container element (3).

8. A plant wall (1) as set forth in any of the preceding claims, **characterized in that** the liquid inlet pipe/inlet pipes (53) extending in conjunction with the liquid overflow pipe is/are coupled with a liquid reservoir (51) or water mains, and from the lowermost container element (3; 3") extends an overflow pipe (55) to the liquid reservoir (51) provided with a pump (52) for delivering water or a nutrient solution into said liquid inlet pipe/inlet pipes (53).

9. A plant wall (1) as set forth in any of the preceding claims, **characterized in that** each container element (3) is coupled by its rear wall to a frame structure (2), which is made up of upright members (21) or a panel type frame (23).

10. A method for recycling nutrients in a plant wall (1) as set forth in claim 1 or 2, having its non-woven bags (4) furnished with a plurality of plants, **characterized in that** the method comprises at least the following steps of:
- placing at least one plant in a non-woven bag (4), said non-woven bag (4) having been positioned on the floor (35) of a container element (3) in such a way that the stem of a plant accommodated in each non-woven bag for growing extends upward from the floor (35) of a container element, the manufacturing material of said non-woven bag (4) being a so-called non-woven fabric, wherein the fabric is produced from a porous plastic-based material by bonding long fibers or filaments to each other mechanically, thermally and/or chemically, such that the bag has such an average pore density per unit are that the bag (4) is permeable to both water and nutrients possibly dissolved in water, yet is capable of retaining water for more than ten seconds in a wet condition, as well as is capable of blocking the admission of light from what between the edge of a container element's container support (37) and the free edge of a front flank wall, in a view upward from the container element's floor, is a void area or opening (38) by not less than 90% to the root system of a plant once the plant has its roots placed in the non-woven bag (4), and
- feeding a nutrient solution onto at least one container element (3) by way of a liquid inlet pipe/inlet pipes (53) extending in conjunction with a liquid overflow pipe (55), such that a main portion of the nutrient solution not consumed by the plants in an upper container element is conducted by way of a first overflow pipe (55) gravitationally onto a lower container element.

11. A method as set forth in claim 10, **characterized in that** the nutrient solution is conducted from the lowermost container element (3; 3") by way of an overflow pipe (55) into a liquid reservoir (5) and pumped from said liquid reservoir always after a specific period of time at least to the uppermost container element (3; 3') along a liquid inlet pipe/inlet pipes (53) extending in conjunction with the overflow pipe (55).

12. A method as set forth in claim 10, **characterized in that** the water present on the floor of a container element (3) is allowed to evaporate outside the plant wall before pumping more water and nutrients therein onto the floor or to the proximity of the floor of the container element (3) by way of the liquid inlet pipe/liquid inlet pipes (53).

13. A method as set forth in any of claims 10-12, **characterized in that** the growth medium placed inside a non-woven bag (4), as well as the material for a non-woven bag, are selected in such a way that the non-woven bag itself does not substantially absorb water and nutrients dissolved therein, and it has a density of about 100-400, preferably about 120 g/m², consistent with the DIN standard EN 29073-1.

## Patentansprüche

1. Pflanzenwand (1), umfassend eine Vielzahl von stapelbaren, länglichen Behältniselementen (3) und eine Vielzahl von Vliesbeuteln (4),
wobei in jedem Behältniselement (3) mindestens eine Pflanze zum Wachsen untergebracht werden kann, derart, dass die Wurzeln jeder zum Wachsen untergebrachten Pflanze in einem mit Poren versehenen Vliesbeutel (4) einführbar sind, wobei jedes Behältniselement (3) ein längliches mit einem Boden versehenes Behältnis (35) umfasst, wobei die seitlich zeigenden Endseiten (35b) des Bodens mit nach oben zeigenden Endwänden (32) versehen sind und seine in Längsrichtung zeigenden Flankenseiten (35a) mit nach oben zeigenden Flankenwänden (31) versehen sind, umfassend eine hintere Flankenwand (31a), die sich in einem Winkel von etwa 90 Grad von einer Ebene des Bodens (35) nach oben erstreckt, sowie eine vordere Flankenwand (31b), die sich in einem Winkel von etwa 20 bis 50 Grad, vorzugsweise in einem Winkel von etwa 30 bis 45 Grad, von der Ebene des Bodens nach oben und gleichzeitig von der hinteren Flankenwand (31a) weg erstreckt, wobei die hintere Flankenwand (31b) an ihrem oberen Rand mit einem Behältnisträger (37) ausgebildet ist, der sich in der Ebene des oberen Rands der hinteren Flankenseite zur gegenüberliegenden vorderen Flankenwand (31b) erstreckt, derart, dass auf dem Behältnisträger (37) der Boden (35) eines oberen Behältniselements (3) aufgesetzt werden kann, das sich über dem Behältniselement (3) befindet, derart, dass sich das obere Behältniselement und das untere Behältniselement (3) zusammen der Länge nach parallel erstrecken, wobei der Behältnisträger (37) eine solche Länge in Längsrichtung der Endwände (32) aufweist, dass zwischen einem freien Rand des Behältnisträgers (37) des Behältniselements und einem oberen Rand der vorderen Flankenwand (37a) etwas verbleibt, was vom Boden des Behältniselements aus nach oben gesehen eine Leerstelle oder Öffnung (38) ist, **dadurch gekennzeichnet, dass**
- jeder Vliesbeutel (4) in einem Behältniselement (3), auf dem Boden (35) des Behältniselements, positioniert werden kann, derart, dass sich der Stängel einer Pflanze, die in jedem Vliesbeutel zum Wachsen untergebracht ist, vom Boden (35) des Behältniselements nach oben erstreckt, wobei das Herstellungsmaterial des Vliesbeutels (4) aus einem so genannten Vliesstoff besteht, wobei der Stoff aus einem porösen Material auf Kunststoffbasis hergestellt wird, indem lange Fasern oder Filamente mechanisch, thermisch und/oder chemisch derart miteinander verbunden werden, dass der Beutel eine solche durchschnittliche Porendichte pro Flächeneinheit aufweist, dass der Beutel (4) sowohl für Wasser als auch für möglicherweise in Wasser gelöste Nährstoffe durchlässig ist, aber Wasser im feuchten Zustand für mehr als zehn Sekunden zurückhalten kann und in der Lage ist, den Lichteinfall aus dem Bereich zwischen dem oberen Rand und der vorderen Flankenwand auf das Wurzelsystem einer Pflanze um mindestens 90 % zu blockieren, nachdem die Pflanze ihre Wurzeln in dem Beutel platziert hat, und
- es eine Flüssigkeitsverbindung vom oberen Behältniselement zum unteren Behältniselement über ein erstes Überlaufrohr (55) sowie ein mögliches zweites Überlaufrohr (55) gibt, das mit einem Flutventil (6) ausgestattet ist, und
- sich von dem unteren Behältniselement zu dem oberen Behältniselement ein Flüssigkeitseinlassrohr (53) erstreckt, das in Verbindung mit dem ersten Überlaufrohr (55) verläuft.

2. Pflanzenwand (1) nach Anspruch 1, umfassend ferner in jedem Behältniselement (3) mindestens eine Pflanze zum Wachsen, derart, dass die Wurzeln jeder Pflanze in einen Vliesbeutel (4) eingeführt worden sind, der mit Poren versehen ist, **dadurch gekennzeichnet, dass** jeder Vliesbeutel (4) in einem Behältniselement (3), auf dem Boden (35) des Behältniselements, platziert worden ist, derart, dass sich der Stängel einer in jedem Vliesbeutel zum Wachsen eingeführten Pflanze vom Boden (35) des Behältniselements aus nach oben erstreckt.

3. Pflanzenwand (1) nach Anspruch 1 oder 2, **dadurch gekennzeichnet, dass** der Vliesbeutel (4) aus einem Stoff auf Kunststoffbasis hergestellt ist, der vorwiegend aus nicht-wasserabsorbierendem und luftdurchlässigem Polyolefin, Polyester, Polyamid oder einer Mischung davon besteht, wobei das Stoffmaterial vorzugsweise aus einem Poly-Niederalkylen wie etwa Polypropylen besteht.

4. Pflanzenwand (1) nach Anspruch 3, **dadurch gekennzeichnet, dass** der Vliesbeutel (4) aus thermisch miteinander verbundenen, mäßig langen, im Wesentlichen nicht wasserabsorbierenden Fasern hergestellt ist, vorzugsweise aus thermisch miteinander verbundenen Poly-Niederalkylenfasern, wie etwa aus Polypropylenfasern, und das für jede Pflanze vorgesehene Wachstumsmedium vollständig oder zum größten Teil in den für die Pflanze vorgesehenen Vliesbeutel (4) eingebracht ist.

5. Pflanzenwand (1) nach einem der vorhergehenden Ansprüche, **dadurch gekennzeichnet, dass** der Vliesbeutel (4) mit Beutel-durchdringenden Poren, wie etwa kleinen Perforationen, versehen ist und das Material für den Vliesbeutel (4) im Hinblick darauf ausgewählt worden ist, dass wenigstens einige der kleinen Wurzeln einer Pflanze den Beutel (4) durchdringen können.

6. Pflanzenwand (1) nach einem der vorhergehenden Ansprüche, **dadurch gekennzeichnet, dass** das Behältniselement (3) mit einem Flüssigkeitseinlassrohr (53) versehen ist, das sich längsseits neben dem Flüssigkeitsüberlaufrohr (55) oder in einem Verbindungsrohr (500) zusammen mit dem Überlaufrohr (55) erstreckt.

7. Pflanzenwand (1) nach Anspruch 6, **dadurch gekennzeichnet, dass** sich die obere Auslassöffnung (55a) des Flüssigkeitsüberlaufrohrs (55) auf die Ebene des Bodens (35) eines oberen Behältniselements oder etwas über der Ebene des Bodens (35) öffnet und sich die untere Einlassöffnung (55b) des Überlaufrohrs (55) in die Nähe des Bodens (35) eines unteren Behältniselements (3) öffnet.

8. Pflanzenwand (1) nach einem der vorhergehenden Ansprüche, **dadurch gekennzeichnet, dass** das Flüssigkeitseinlassrohr/die Flüssigkeitseinlassrohre (53), das/die sich in Verbindung mit dem Flüssigkeitsüberlaufrohr erstreckt/erstrecken, mit einem Flüssigkeitsbehälter (51) oder einer Hauptwasserleitung verbunden ist/sind, und sich vom untersten Behältniselement (3; 3") ein Überlaufrohr (55) zum Flüssigkeitsbehälter (51) erstreckt, der mit einer Pumpe (52) zum Zuführen von Wasser oder einer Nährstofflösung in das Flüssigkeitseinlassrohr/die Flüssigkeitseinlassrohre (53) versehen ist.

9. Pflanzenwand (1) nach einem der vorhergehenden Ansprüche, **dadurch gekennzeichnet, dass** jedes Behältniselement (3) mit seiner Rückwand mit einer Rahmenstruktur (2) verbunden ist, die aus aufrechten Elementen (21) oder einen Rahmen vom Täfelungstyp (23) besteht.

10. Verfahren zum Recyceln von Nährstoffen in einer Pflanzenwand (1) nach Anspruch 1 oder 2, wobei die Vliesbeutel (4) mit einer Vielzahl von Pflanzen ausgestattet sind, **dadurch gekennzeichnet, dass** das Verfahren mindestens die folgenden Schritte umfasst:
- Platzieren mindestens einer Pflanze in einen Vliesbeutel (4), wobei der Vliesbeutel (4) derart auf dem Boden (35) eines Behältniselements (3) positioniert worden ist, dass sich der Stängel einer Pflanze, die zum Wachsen in jedem Vliesbeutel untergebracht ist, vom Boden (35) eines Behältniselements aus nach oben erstreckt, wobei das Herstellungsmaterial des Vliesbeutels (4) ein so genannter Vliesstoff ist, wobei der Stoff aus einem porösen Material auf Kunststoffbasis hergestellt wird, indem lange Fasern oder Filamente mechanisch, thermisch und/oder chemisch derart miteinander verbunden werden, dass der Beutel eine solche durchschnittliche Porendichte pro Einheit aufweist, dass der Beutel (4) sowohl für Wasser als auch für möglicherweise in Wasser gelöste Nährstoffe durchlässig ist, aber Wasser im feuchten Zustand für mehr als zehn Sekunden zurückhalten kann und in der Lage ist, den Lichteinfall aus einem Bereich zwischen dem Rand des Behältnisträgers (37) eines Behältniselements und dem freien Rand einer vorderen Flankenwand, der vom Boden des Behältniselements aus nach oben gesehen ein freier Raum oder eine Öffnung (38) ist, auf das Wurzelsystem einer Pflanze um mindestens 90 % zu blockieren, nachdem die Pflanze ihre Wurzeln in dem Vliesbeutel (4) platziert hat, und
- Zuführen einer Nährstofflösung auf mindestens ein Behältniselement (3) über ein Flüssigkeitseinlassrohr/Flüssigkeitseinlassrohre (53), das/die sich in Verbindung mit einem Flüssigkeitsüberlaufrohr (55) erstreckt/erstrecken, derart, dass ein Hauptteil der Nährstofflösung, der nicht von den Pflanzen in einem oberen Behältniselement verbraucht wird, über ein erstes Überlaufrohr (55) gravitativ auf ein unteres Behältniselement geleitet wird.

11. Verfahren nach Anspruch 10, **dadurch gekennzeichnet, dass** die Nährstofflösung aus dem untersten Behältniselement (3; 3") über ein Überlaufrohr (55) in einen Flüssigkeitsbehälter (5) geleitet und immer nach einer bestimmten Zeitspanne aus diesem Flüssigkeitsbehälter entlang eines Flüssigkeitseinlassrohrs/entlang von Flüssigkeitseinlassrohren (53), das/die sich in Verbindung mit dem Überlaufrohr (55) erstreckt/erstrecken, mindestens bis zum obersten Behältniselement (3; 3') gepumpt wird.

12. Verfahren nach Anspruch 10, **dadurch gekennzeichnet, dass** das auf dem Boden eines Behältniselements (3) vorhandene Wasser außerhalb der Pflanzenwand verdampfen kann, bevor mehr Wasser und Nährstoffe über das Flüssigkeitseinlassrohr/die Flüssigkeitseinlassrohre (53) auf den Boden oder in die Nähe des Bodens des Behältniselements (3) hineingepumpt werden.

13. Verfahren nach einem der Ansprüche 10 bis 12, **dadurch gekennzeichnet, dass** das in einem Vliesbeutel (4) platzierte Wachstumsmedium sowie das Material für einen Vliesbeutel derart gewählt sind, dass der Vliesbeutel selbst im Wesentlichen kein Wasser und darin gelöste Nährstoffe absorbiert und eine Dichte von etwa 100 bis 400, vorzugsweise etwa 120 g/m², entsprechend der DIN-Norm EN 29073-1 aufweist.

## Revendications

1. Mur végétal (1) comprenant une pluralité d'éléments de récipient (3) allongés empilables, et une pluralité de sacs en non-tissé (4),
dans lequel l'intérieur de chaque élément de récipient (3) peut accueillir au moins une plante destinée à pousser, de telle façon que les racines de chaque ensemble de plante destinée à pousser peuvent être introduites à l'intérieur d'un sac en non-tissé (4) doté de pores, chaque élément de récipient (3) comprenant un réceptacle allongé doté d'un plancher (35), ledit plancher présentant des côtés d'extrémité orientés latéralement (35b) pourvus de parois orientées vers le haut (32) et des côtés latéraux orientés longitudinalement (35a) pourvus de parois orientées vers le haut (31), lesquelles incluent une paroi latérale arrière (31a) s'étendant selon un angle d'environ 90 degrés vers le haut à partir d'un niveau du plancher (35), ainsi qu'une paroi latérale avant (31b) s'étendant selon un angle d'environ 20-50 degrés, de préférence selon un angle d'environ 30-45 degrés, vers le haut à partir du niveau de plancher et simultanément à distance de ladite paroi latérale arrière (31a), ladite paroi latérale avant (31b) présentant un bord supérieur formé avec un support de récipient (37) s'étendant dans le plan du bord supérieur du côté latéral arrière vers la paroi latérale avant (31b) opposée, de telle façon que sur le support de récipient (37) peut être posé ledit plancher (35) d'un élément de récipient supérieur (3), situé au-dessus dudit élément de récipient (3), de telle façon que l'élément de récipient supérieur et l'élément de récipient inférieur (3) s'étendent longitudinalement de façon co-directionnelle, le support de récipient (37) présentant une longueur telle dans la direction longitudinale des parois d'extrémité (32) qu'un espace vide ou une ouverture (38) est formé(e) entre un bord libre du support de récipient (37) de l'élément de récipient et un bord supérieur de la paroi latérale avant (37a), situé à gauche dans une vue ascendante depuis le plancher de l'élément de récipient, **caractérisé en ce que**
- chaque sac en non-tissé (4) est capable d'être positionné à l'intérieur d'un élément de récipient (3), sur le plancher (35) dudit élément de récipient, de telle façon qu'une tige d'un ensemble de plante dans chaque sac en non-tissé pour pousser s'étend vers le haut à partir du plancher (35) de l'élément de récipient, le matériau de fabrication dudit sac en non-tissé (4) étant constitué d'un tissu dit non-tissé, le tissu étant produit à partir d'une matière à base de plastique poreux, par assemblage de longues fibres ou de longs filaments les un(e)s aux autres mécaniquement, thermiquement et/ou chimiquement, de sorte que le sac présente une densité de pore moyenne par aire d'unité telle que le sac (4) est perméable à la fois à l'eau et aux nutriments susceptibles d'être dissous dans de l'eau, tout en étant capable de retenir l'eau pendant plus de dix secondes dans un état mouillé, et tout en étant capable de bloquer l'admission de lumière de pas moins de 90% depuis la zone entre le bord supérieur et la paroi latérale avant jusqu'au système de racines d'une plante une fois que la racine de la plante est placée à l'intérieur du sac, et
- une connexion fluidique est créée entre l'élément de récipient supérieur et l'élément de récipient inférieur, au moyen d'un premier tuyau de trop-plein (55) ainsi que d'un éventuel deuxième tuyau de trop-plein (55) pourvu d'une soupape submersible (6), et
- un tuyau d'entrée de liquide (53) s'étendant conjointement avec le premier tuyau de trop-plein (55) à partir de l'élément de récipient inférieur jusqu'à l'élément de récipient supérieur.

2. Mur végétal (1) selon la revendication 1, comprenant également, à l'intérieur de chaque élément de récipient (3), au moins un plante à faire pousser, de telle façon que les racines de chaque plante ont été introduites à l'intérieur d'un sac en non-tissé (4) pourvu de pores, **caractérisé en ce que** chaque sac en non-tissé (4) a été placé à l'intérieur d'un élément de récipient (3), sur le plancher (35) dudit élément de récipient, de telle façon que la tige d'une plante introduite dans chaque sac en non-tissé pour la culture s'étend vers le haut à partir du plancher (35) de l'élément de récipient.

3. Mur végétal (1) selon la revendication 1 ou 2, **caractérisé en ce que** le sac en non-tissé (4) est constitué d'un tissu à base de plastique, lequel est constitué majoritairement d'une polyoléfine, d'un polyester, d'un polyamide ou d'un mélange de ceux-ci, transmettant l'air et n'absorbant pas l'eau, le matériau du tissu étant de préférence constitué d'un poly(alkylène) inférieur tel que le polypropylène.

4. Mur végétal (1) selon la revendication 3, **caractérisé en ce que** le sac en non-tissé (4) est constitué de fibres de poly(alkylène) inférieur essentiellement non-absorbante pour l'eau, thermiquement liées entre elles, telles que des fibres de polypropylène, et le milieu de culture prévu pour chaque plante est placé entièrement ou majoritairement à l'intérieur du sac en non-tissé (4) prévu pour ladite plante.

5. Mur végétal (1) selon l'une quelconque des revendications précédentes, **caractérisé en ce que** le sac en non-tissé (4) est pourvu de pores pénétrant dans le sac, similaires à de petites perforations, et le matériau du sac en non-tissé (4) a été sélectionné pour permettre à certaines au moins des petites racines de pénétrer dans ledit sac (4).

6. Mur végétal (1) selon l'une quelconque des revendications précédentes, **caractérisé en ce que** l'élément de récipient (3) est pourvu d'un tuyau d'entrée de liquide (53), lequel s'étend le long du tuyau de trop-plein de liquide (55) ou dans un tuyau de raccordement (500) ensemble avec le tuyau de trop-plein (55) .

7. Mur végétal (1) selon la revendication 6, **caractérisé en ce que** le tuyau de trop-plein de liquide (55) présente un orifice de sortie supérieur (55a) débouchant sur le niveau du plancher (35) d'un élément de récipient supérieur ou légèrement au-dessus du niveau du plancher (35), et le tuyau de trop-plein (55) présente un orifice d'entrée inférieur (55b) débouchant à proximité du plancher (35) d'un élément de récipient inférieur (3).

8. Mur végétal (1) selon l'une quelconque des revendications précédentes, **caractérisé en ce que** le(s) tuyau(x) d'entrée de liquide (53) s'étendant conjointement avec le tuyau de trop-plein de liquide est/sont couplés à un réservoir de liquide (51) ou à des conduites d'eau, et un tuyau de trop-plein (55) s'étend à partir de l'élément de récipient le plus bas (3 ; 3") jusqu'au réservoir de liquide (51) pourvu d'une pompe (52) pour distribuer de l'eau ou une solution de nutriment dans le(s)dit(s) tuyau(x) d'entrée de liquide (53).

9. Mur végétal (1) selon l'une quelconque des revendications précédentes, **caractérisé en ce que** chaque élément de récipient (3) est couplé par sa paroi arrière à une structure de cadre (2), laquelle est constituée d'éléments verticaux (21) ou d'un cadre de type panneau (23).

10. Procédé pour le recyclage de nutriments dans un mur végétal (1) selon la revendication 1 ou 2, dont les sacs en non-tissé (4) sont pourvus d'une pluralité de plantes, **caractérisé en ce que** le procédé comprend au moins les étapes suivantes :
- disposition d'au moins une plante dans un sac en non-tissé (4), ledit sac en non-tissé (4) ayant été positionné sur le plancher (35) d'un élément de récipient (3) de telle façon que la tige d'une plante accueillie dans chaque sac en non-tissé pour pousser s'étend vers le haut à partir du plancher (35) d'un élément de récipient, le matériau de fabrication dudit sac en non-tissé (4) étant un tissu dit non-tissé, le tissu étant produit à partir d'un matériau à base de plastique poreux par assemblage de longues fibres ou de longs filaments mécaniquement, thermiquement et/ou chimiquement, de sorte que le sac présente une densité de pore moyenne par unité telle que le sac (4) est perméable à la fois à l'eau et aux nutriments éventuellement dissous dans l'eau, tout en étant capable de retenir l'eau pendant plus de dix secondes dans un état mouillé, et tout en étant capable de bloquer l'admission de lumière depuis une zone située entre le bord d'un support de récipient (37) d'un élément de récipient et le bord libre d'une paroi latérale, dans une vue ascendante à partir du plancher de l'élément de récipient, où se trouve un espace vide ou une ouverture (38), de pas plus de 90%, vers le système de racines d'une plante une fois que la plante a ses racines placées dans le sac en non-tissé (4), et
- l'apport d'une solution de nutriment dans au moins un élément de récipient (3) à l'aide d'un tuyau d'entrée/de tuyaux d'entrée de liquide (53) s'étendant conjointement avec un tuyau de trop-plein de liquide (55), de telle façon qu'une majeure partie de la solution de nutriment non consommée par les plantes dans un élément de récipient du haut est dirigée gravitationnellement vers un élément de récipient inférieur à l'aide d'un premier tuyau de trop-plein (55).

11. Procédé selon la revendication 10, **caractérisé en ce que** la solution de nutriment est guidée à partir de l'élément de récipient le plus bas (3 ; 3") à l'aide d'un tuyau de trop-plein (55) vers un réservoir de liquide (5) et pompée à partir dudit réservoir de liquide, toujours après une durée spécifique, au moins jusqu'à l'élément de récipient le plus haut (3 ; 3") le long d'un tuyau d'entrée/de tuyaux d'entrée de liquide (53) s'étendant conjointement avec le tuyau de trop-plein (55).

12. Procédé selon la revendication 10, **caractérisé en ce que** l'eau présente sur le plancher d'un élément de récipient (3) peut s'évaporer à l'extérieur du mur végétal avant que de l'eau et des nutriments supplémentaires ne soient pompés dans celui-ci sur le plancher ou à proximité du plancher de l'élément de récipient (3) à l'aide du/des tuyau(x) d'entrée de liquide (53).

13. Procédé selon l'une quelconque des revendications 10 à 12, **caractérisé en ce que** le milieu de culture placé à l'intérieur d'un sac en non-tissé (4), ainsi que le matériau pour un sac en non-tissé, sont sélectionnés de telle façon que le sac en non-tissé lui-même n'absorbe quasiment pas d'eau et de nutriments dissous dans celle-ci, et présentent une densité d'environ 100-400, de préférence d'environ 120 g/m², conformément à la norme DIN EN 29073-1.
